# EUROPEAN PATENT APPLICATION

(11) **EP 4 776 167 A1**
(43) Date of publication of application: **15.07.2026**
(21) Application number: 25151572.2
(22) Date of filing: 13.01.2025
(51) Int. Cl.: G06F 21/53, G06F 9/455, G06F 21/56, G06F 21/57

(54) **ISOLATED PLATFORM FOR RESPONSIBLE ARTIFICIAL INTELLIGENCE**

(71) Applicant: Microsoft Technology Licensing, LLC, Redmond, WA 98052 (US)
(72) Inventor: SAKIB, Md Nazmus, Redmond, 98052-6399 (US); HOLDSWORTH, Katharine Ormond, Redmond, 98052-6399 (US); ADAM, Preston Derek, Redmond, 98052-6399 (US); MALHOTRA, Akash, Redmond, 98052-6399 (US)
(74) Representative: CMS Cameron McKenna Nabarro Olswang LLP

(57) **Abstract**

An isolated platform for responsible Al is described. In various examples, a method is performed by a computing device. Output is generated by executing at least part of an application in an isolated virtual machine with an input-output virtualized accelerator, where the application is an artificial intelligence application. The isolated virtual machine is used to check the output. In response to the check being successful, the output is returned. In response to the check being unsuccessful, an error message is returned.

## Description

### BACKGROUND

Responsible artificial intelligence (AI) refers to AI systems designed, used and deployed in a manner that takes into account factors such as safety, security, ethics, fairness, accountability and transparency. AI systems may comprise machine learning models, autonomous agents, or other types of Al system which compute outputs with some degree of agency or independence. Because of the agency or independence there is a desire to carefully control outputs of these AI systems to facilitate safety, security and ethics.

The embodiments described below are not limited to implementations which solve any or all of the disadvantages of known artificial intelligence deployments.

### SUMMARY

The following presents a simplified summary of the disclosure in order to provide a basic understanding to the reader. This summary is not intended to identify key features or essential features of the claimed subject matter nor is it intended to be used to limit the scope of the claimed subject matter. Its sole purpose is to present a selection of concepts disclosed herein in a simplified form as a prelude to the more detailed description that is presented later.

An isolated platform for responsible AI is described in some examples. The isolated platform may be a local platform such as a platform at a client or end user computing device.

In various examples, a method is performed by a computing device. Output is generated by executing at least part of an application in an isolated virtual machine with an input-output virtualized accelerator, where the application is an artificial intelligence application. The isolated virtual machine is used to check the output. In response to the check being successful, the output is returned. In response to the check being unsuccessful, an error message is returned.

Many of the attendant features will be more readily appreciated as the same becomes better understood by reference to the following detailed description considered in connection with the accompanying drawings.

### DESCRIPTION OF THE DRAWINGS

The present description will be better understood from the following detailed description read in light of the accompanying drawings, wherein:
FIG. 1 is a schematic diagram of a computing device having an isolated platform for responsible AI;
FIG. 2 is a schematic diagram of a computing device having an isolated virtual machine with an input-output virtualized accelerator;
FIG. 3 is a flow diagram of a method performed by a computing device such as that of FIG. 1 or FIG. 2;
FIG. 4 is a flow diagram of a method of content provenance performed by a computing device such as that of FIG. 1 or FIG. 2;
FIG. 5 is a flow diagram of a method of facilitating responsible AI performed by a computing device such as that of FIG. 1 or FIG. 2;
FIG. 6 illustrates an exemplary computing-based device for implementing the examples described herein.
Like reference numerals are used to designate like parts in the accompanying drawings.

### DETAILED DESCRIPTION

The detailed description provided below in connection with the appended drawings is intended as a description of the present examples and is not intended to represent the only forms in which the present examples are constructed or utilized. The description sets forth the functions of the examples and the sequence of operations for constructing and operating the examples. However, the same or equivalent functions and sequences may be accomplished by different examples.

Malware may be inadvertently downloaded onto a computing device, such as a personal computer. A malicious link, file or attachment may be presented to a user as part of a phishing email or other social engineering scheme. If the user clicks on the infected file, attachment or link, malware may install on their device. In these and other ways malware may inadvertently make its way onto a computing device.

Once malware is present on a computing device attackers may use privilege escalation techniques to gain unauthorized access to higher levels of permissions within a computing device, computing system or computing network. By elevating their privileges, attackers are able to perform actions that are otherwise restricted, such as accessing sensitive data, installing further malware or gaining access to protected computing system functions. In an example, a regular user may use privilege elevation to gain administrative rights.

In the context of artificial intelligence applications deployed on a computing device there are particular problems with regards to malware that infects the computing device and achieves privilege elevation, such as to an administrative privilege level or kernel privilege level. An artificial intelligence application is a software application that comprises a machine learning model, an autonomous software agent, or other type of software application which, given an input, computes outputs with some degree of agency or independence. Because of the agency or independence there is a desire to carefully control outputs of AI applications to facilitate safety, security and ethics. A non-exhaustive list of examples of AI applications is: generative machine learning model, document editing application that comprises machine learning functionality, image editing application that comprises machine learning functionality, source code editing application that comprises machine learning functionality, artificial intelligence agent, chat bot.

Where malware infects a computing device and achieves privilege elevation, any artificial intelligence applications deployed at the computing device are at risk. The malware is potentially able to tamper with inputs to the artificial intelligence application or outputs from the artificial intelligence application. The malware is potentially able to tamper with the artificial intelligence application itself, such as by modifying parameter values of a machine learning model, or disturbing other functionality of the artificial intelligence application.

In a non-limiting example, the artificial intelligence application is a raster graphics editor that is able to open, modify and save image files. The raster graphics editor comprises a generative machine learning model with functionality to generate a specific type of image based on a user's description. In an example, a user may type "a blue cat with a red hat" and the raster graphics editor may use a generative machine learning model to generate an image depicting a blue cat with a red hat.

Artificial intelligence applications that execute on computing devices such as desktop computers, personal computers, laptop computers, head worn computers and other types of computing device are increasingly available. The computing device may have hardware accelerators such as a graphics processing unit (GPU), or neural processing unit (NPU), or other accelerator to facilitate execution of artificial intelligence applications.

Since there is a potential for malware to have infected a computing device as described above, there is a growing desire to have a way to ensure that artificial intelligence applications are used responsibly at a computing device. A tamper-proof, isolated platform for responsible artificial intelligence has therefore been developed for use at computing devices such as end user computing devices.

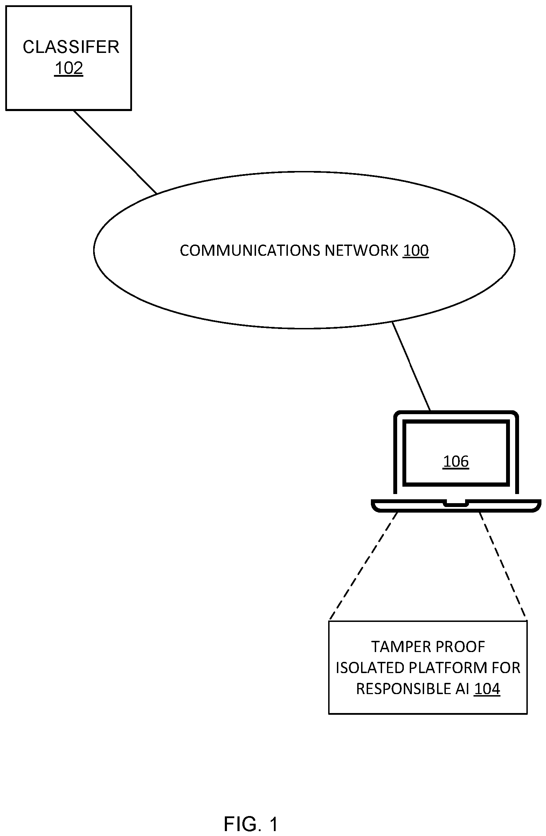

FIG. 1 is a schematic diagram of a computing device 106 having a tamper-proof, isolated platform 104 for responsible artificial intelligence. The computing device is any end user computing device such as a personal computer, desktop computer, laptop computer, tablet computer, smart phone, head worn computer, wearable computer. The computing device 106 may be connected to a communications network 100 such as the internet, an intranet or other communications network and may be in communication with a classifier 102. The classifier is computer implemented and comprises functionality for classifying output of an artificial intelligence application as complying with responsible artificial intelligence criteria or not. Responsible artificial intelligence criteria are defined by a human operator and may comprise criteria relating to human dignity, diversity, inclusion, laws, regulations, likelihood of causing harm, distress or confusion to others.

An artificial intelligence application may be deployed at the computing device 106 and execute entirely or partly within the isolated platform 104. Any malware which has made its way into the isolated platform is unable to affect the execution of the artificial intelligence application because a hypervisor that implements the isolated platform 104 has security preventing unauthorized software (such as malware) from executing, even where the unauthorized software is malware with administrator or kernel level privilege. Checks may be carried out by the isolated platform to check inputs to the artificial intelligence application, or outputs from the artificial intelligence application, or operation of the artificial intelligence application. The checks may be responsible AI checks or content provenance checks for example. Because the checks are carried out by the isolated platform, malware on the end user computing device is unable to interfere with the checks. In some cases the checks are carried out by authorized software in the isolated platform, and in some cases by authorized software at a remote computing entity (such as classifier 102) in secure communication with the isolated platform 104.

The isolated platform 104 is said to be tamper-proof since malware in the isolated platform seeking to tamper with the isolated platform itself is prevented from executing due to security of a hypervisor of the isolated platform. The hypervisor supports an isolated virtual machine that forms the isolated platform 104. The hypervisor only permits software that it knows and expects to execute in the isolated platform. In some examples, the hypervisor is configured during manufacture with details of permitted software. In some examples, the hypervisor receives updates from a kernel of the computing device with details of software the hypervisor is permitted to execute. In some examples, the hypervisor is built to trust authenticated configuration files with details of permitted software delivered during manufacturing or at runtime from a service.

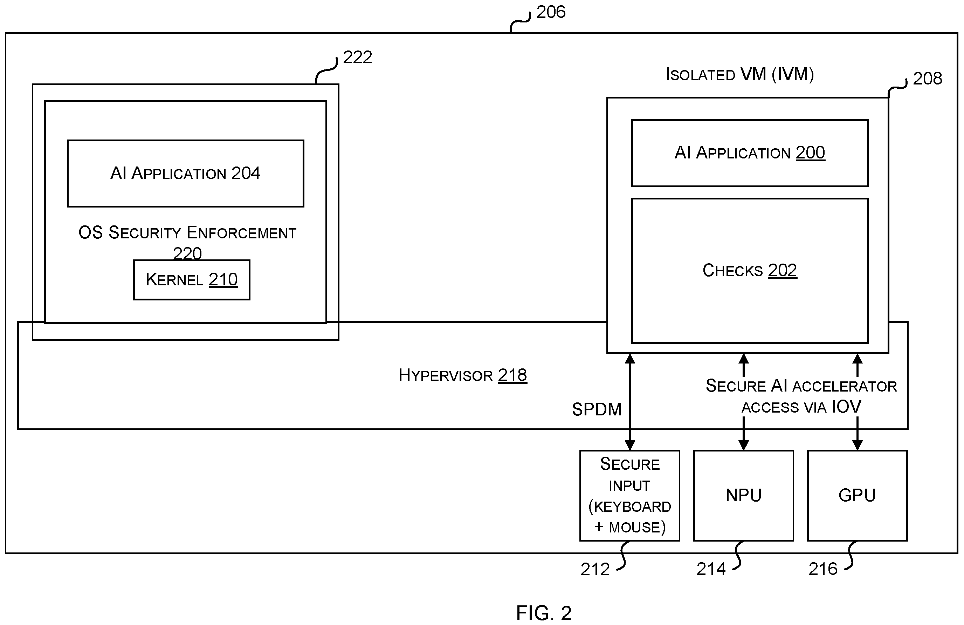

FIG. 2 is a schematic diagram of a computing device 206 having an isolated virtual machine 208 with two input-output virtualized accelerators 214, 216. The isolated virtual machine 208 may be a software isolated virtual machine or a hardware isolated virtual machine. A software isolated virtual machine is a virtual machine on a host computing device where the host computing device may have other virtual machines and/or a kernel. The software isolated virtual machine operates securely and independently of the other virtual machines and the kernel as a result of the software isolation. A hardware isolated virtual machine comprises confidential computing technology. In both the case of a software isolated virtual machine and the case of a hardware isolated virtual machine, the hypervisor sets up the isolation of the virtual machine using hardware virtualization support. Any suitable hardware virtualization support may be used such as Intel (trade mark) Vt-d or AMD (trade mark) Vi. An input-output virtualized accelerator is a hardware accelerator such as a graphics processing unit, neural processing unit or other accelerator, that is directly exposed to a virtual machine using input-output virtualization. Although FIG. 2 shows two input-output virtualized accelerators 214, 216 it is possible to use only one input-output virtualized accelerator or to use more than two.

Installed on the computing device 206 are two instances of an application which is an artificial intelligence application. A first instance 204 of the artificial intelligence application is installed on the computing device 206 without virtualization and is executed by a kernel 210 of the computing device 206. The first instance 204 of the artificial intelligence application is subject to operating system security enforcement 220 of kernel 210. The hypervisor has made a partition 222 and the kernel 210 executes in the partition and is not part of the hypervisor itself.

A second instance 200 of the artificial intelligence application is deployed inside the isolated virtual machine 208. The second instance 200 of the artificial intelligence application is the same as the first instance 204 of the artificial intelligence application except that the second instance 200 is virtualized, that is, made suitable for execution entirely or only partly in a virtual machine. The second instance 200 of the artificial intelligence application may have an indicator or label indicating that it is able to be executed in the software-isolated virtual machine. Other processes, such as other applications executing on the computing device 206, are able to detect the indicator and select whether to use the second instance 200 of the artificial intelligence application or the first instance 204 of the artificial intelligence application.

The isolated virtual machine 208 is directly exposed to accelerator hardware by using input-output virtualization such as single root input-output virtualization or any other input-output virtualization technology. In this way the isolated virtual machine 208 has direct access to accelerator hardware such as a graphics processing unit 216, a neural processing unit 214, or any other accelerator. By using the single root input-output virtualization, security is enhanced because malware is unable to intervene between the accelerator hardware and the isolated virtual machine 208. By using the single root input-output virtualization load balancing and efficiency are provided since the isolated virtual machine has direct access to the accelerator hardware and is able to make use of the accelerator hardware when executing the second instance 200 of the AI application. In some examples, there is direct assignment of the entire accelerator to the virtual machine using Discrete Device Assignment/PCIe pass-through. Using Discrete Device Assignment/PCIe pass-through as an alternative to single root input-output virtualization means that the host operating system loses concurrent access to the device. Even so, using Discrete Device Assignment/PCIe pass-through is an option.

In some examples, one or more secure mutually authenticated communication channel is used between one of the accelerators and the secure platform. By using a mutually authenticated communication channel, data transferred between the accelerator and the secure platform is secure.

The isolated virtual machine 208 is deployed on a hypervisor 218 of the computing device 206 as shown in FIG. 2.

In the example of FIG. 2 the first instance of the AI application is not essential and is shown to aid understanding of the technology. The first instance 204 of the AI application is able to use the accelerator hardware such as GPU 216 and NPU 214. However, the first instance 204 of the AI application is not directly connected to the accelerator hardware; there is no input-output virtualization between the first instance 204 of the AI application and the accelerator hardware and the first instance 204 of the AI application is not directly exposed to the accelerator hardware. As a result, malware is able to infiltrate between the accelerators and the first instance 204 of the AI application. An end user may be unaware of the malware between the accelerators and the first instance 204 of the AI application and the malware may disturb execution of the first instance of the AI application 204. This can result in breaches of responsible AI and may result in safety problems or harm being caused where the first instance of the AI application is being used to control a physical or digital entity.

In the example of FIG. 2, malware may be inadvertently installed on the computing device, outside the isolated virtual machine 208. The malware may find a vulnerability in the computing device 206 and exploit the vulnerability to elevate a privilege level of the malware to an administrative privilege level or a kernel privilege level. The malware with elevated privilege is able to disturb operation of the first instance 204 of the AI application and potentially to affect inputs to and outputs from the first instance 204 of the AI application. This can result in breaches of responsible AI and may result in safety problems or harm being caused such as where the first instance of the AI application is being used to control a physical or digital entity. Operating system security enforcement 220 of the kernel 210 is not enough to prevent malicious operations of the malware with elevated privilege.

In contrast, malware is unable to tamper with the second instance 200 of the AI application. The malware inadvertently downloaded onto the computing device 206 is potentially able to infiltrate the isolated virtual machine 208 and is potentially able to elevate in privilege level to administrator level or kernel level within the isolated virtual machine 208. However, because the hypervisor 218 has strict security the hypervisor prevents execution of any process within the isolated virtual machine 208 that the hypervisor 218 has not authorized. Thus the malware with elevated privilege in the isolated virtual machine 208 is unable to execute and so is unable to affect input to, output from or execution of, the second instance 200 of the AI application. Note that the hypervisor authorization may be direct or indirect. In that case of indirect hypervisor authorization, the hypervisor trusts the kernel for the isolated virtual machine. That is, the hypervisor may directly verify the kernel for the isolated virtual machine 208 and if the kernel is determined to be correct it may be trusted to validate other entities like user mode code.

Checking processes 202, authorized by the hypervisor 218, may be deployed in the isolated virtual machine 208. The checking processes 202 check one or more of: input to the second instance of the AI application 200, output from the second instance of the AI application, execution of the second instance of the AI application. In an example, checking output from the second instance of the AI application comprises content provenance checks. In another example, checking output from the second instance of the AI application comprises responsible AI checks. In another example, checking input to the second instance of the AI application comprises checking that the input is from a secure source and was received over a secure connection. In another example, checking execution of the second instance of the AI application comprises executing the second instance of the AI application with validation data to check the performance is as expected.

Since the checking processes 202 are within the isolated virtual machine 208 is it not possible for malware to tamper with the checking processes 202 since the malware with elevated privilege is unable to execute in the isolated virtual machine 208.

In some examples, input to the second instance of the AI application 200 comprises user input or data derived from user input. The user input is received from a secure user input device 212 such as a keyboard and mouse, head worn computer, keyboard and trackpad, touch sensitive screen, or other user input device. The user input device is secure in that it is physically isolated from malicious parties and difficult for malicious parties to eavesdrop. The secure input device is connected to the isolated virtual machine 208 via a secure communication channel. Mutual authentication may be used to establish the secure communication channel which may be an encrypted tunnel. In an example the secure communication channel is implemented using transport layer security TLS, or security protocol and data model (SPDM).

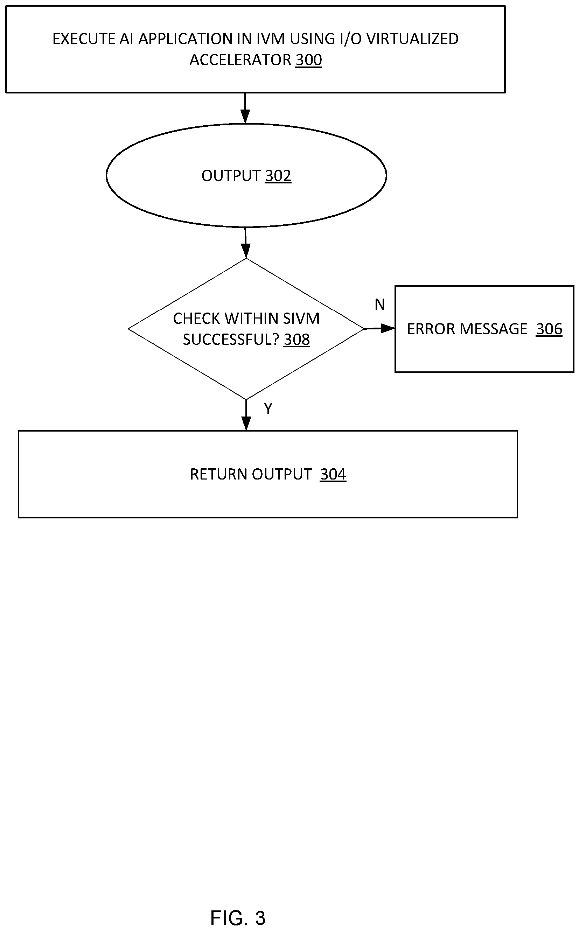

FIG. 3 is a flow diagram of a method performed by a computing device such as that of FIG. 1 or FIG. 2.

All or part of an AI application has been installed in an isolated virtual machine at the computing device. The isolated virtual machine is directly exposed to an accelerator.

The AI application is executed 300 using the isolated virtual machine and the accelerator. As part of the execution 300 the AI application receives input. The input may be a numerical value, a vector, a matrix, an image, a video, text, speech or other input. As a result of the execution, output 302 is generated. The output comprises any one or more of: a numerical value, a class label, an instruction, source code, text, speech, audio signal, image, video, 3D model, content, or other output.

Within the isolated virtual machine, checking processes are deployed and are executed to check 304 any of the input, the output 302, execution of the AI application. The checking processes are authorized by a hypervisor of the computing device used to implement the isolated virtual machine.

In response to the checking processes failing, an error message 306 is returned. For example, the checking processes may identify a breach of responsible AI, a breach of content provenance, performance of the AI application being unexpected. In response to the checking process failing the output 302 is either deleted or returned only with an error message.

In response to the checking process succeeding, the output 302 is returned optionally together with an assurance. The assurance may comprise a cryptographic signature generated by the isolated virtual machine using a cryptographic key stored in the isolated virtual machine. The assurance is extremely useful for other computing processes and entities which seek to use the output. The assurance facilitates security of downstream processes.

The method of FIG 3 may be preceded by a process to securely obtain data for input to the AI application. In this case the computing device 106, 206 has a secure user input device. Events at the secure user input device are used to form data for input to the AI application. In order to prevent a malicious party from tampering with the event data from the secure user input device a secure channel is established between the input device and the isolated virtual machine. Mutual authentication between the software-isolated virtual machine and a secure input device is carried out. In response to the mutual authentication succeeding, data is received from the secure input device and used to form input to the AI application.

In the example of FIG. 3 the AI application may be partly inside the isolated virtual machine and partly outside the isolated virtual machine. In an example, an application comprises an AI module as well as a non-AI module. The AI module is preferably within the isolated virtual machine whereas the non-AI module may be outside the isolated virtual machine. In this way responsible AI and content provenance checks may be performed with respect to the AI module. Security, safety and responsible AI risks are low or not applicable with regard to the non-AI module. By including only the AI module in the isolated virtual machine efficiency is gained. Latency may be improved for the AI application as a whole, where latency of execution within the isolated virtual machine is increased due to the checks 308.

The method of FIG. 3 is extended in some examples by another process checking the application has an indicator indicating that it is able to be executed in the software-isolated virtual machine. If the indicator is present the other process is able to select whether to use the instance of the AI application in the isolated virtual machine or the other instance of the AI application. In this way the other process is given flexibility and control over a level of responsible AI to be applied. This is useful where the other process is concerned with tasks that are not applicable to responsible AI as well as tasks which are applicable to responsible AI.

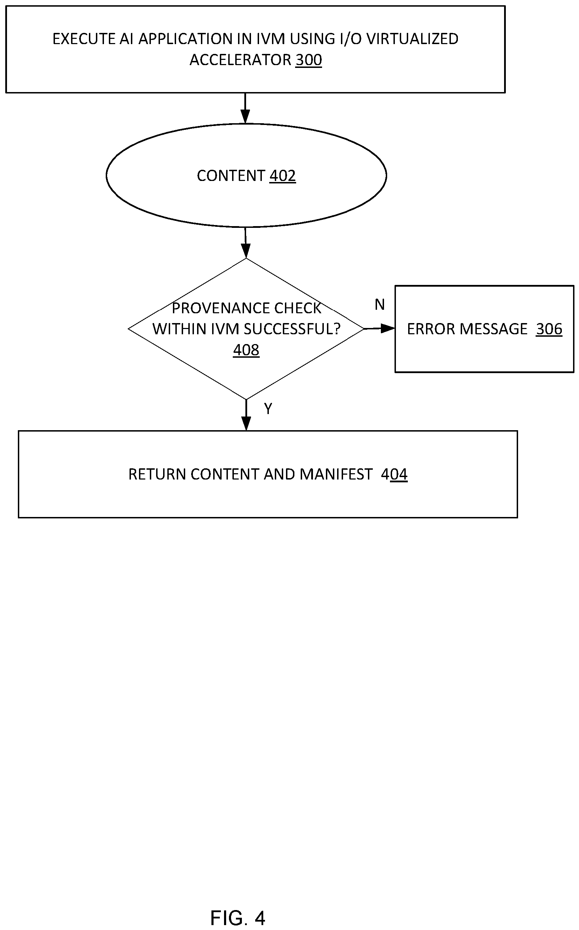

FIG. 4 is a flow diagram of a method performed by a computing device such as that of FIG. 1 or FIG. 2 to facilitate content provenance. The method is the same as for that of FIG. 3 except that the output generated by the AI application is content 402. The content may comprise an image, a video, an audio signal, a speech signal, a 3D model, text, source code or other content.

The checking process 408 performed within the isolated virtual machine checks provenance of the content 402 by generating a change log of the content 402. The change log is a record of creation of the content by the AI application. The record may comprise an identifier of content input to the AI application in order to generate the content 402. Where the content 402 has been generated through iterative use of the AI application this is recorded in the change log.

In some cases, the checking process computes a manifest of the content 402 and cryptographically signs the manifest using a cryptographic key generated or stored within the isolated virtual machine. This gives a benefit that the signing of the manifest is performed locally at the location where the content is generated, so increasing security as compared with generating the content locally at the computing device and signing the manifest using a cloud service. The content may be returned 404 together with the signed manifest.

By using the checking process in the isolated virtual machine to compute and sign the manifest, it is not possible for malware with elevated privilege at the isolated virtual machine to produce a malicious or forged content provenance document that is signed by a key that has some level of trust.

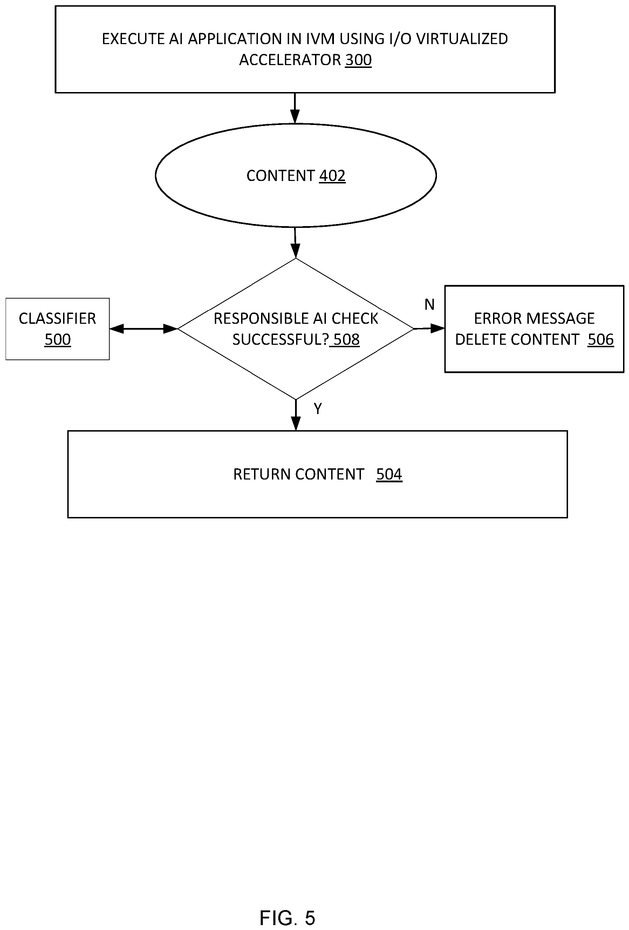

FIG. 5 is a flow diagram of a method performed by a computing device such as that of FIG. 1 or FIG. 2 to facilitate responsible AI. The method is the same as for that of FIG. 3 except that the output generated by the AI application is content 402. The content may comprise an image, a video, an audio signal, a speech signal, a 3D model, text, source code or other content.

The checking process 408 performed within the isolated virtual machine checks responsible AI nature of the content 402 by using a classifier 500 to classify the content 402. The classifier has been trained to classify content as either meeting responsible AI criteria or not. The classifier may be a machine learning model, a rule based model or other classifier. The classifier is deployed in the isolated virtual machine in some cases which gives a benefit that the classifier cannot be tampered with by malware in the isolated virtual machine. In some cases the classifier is remote from the computing device and accessible to the isolated virtual machine via a communications network as illustrated in FIG. 1. In this case a secure communication channel may be established between the isolated virtual machine and the classifier. The isolated virtual machine sends the content to the classifier over the secure communications channel and receives a classification of the content in return, also over the secure communication channel.

Where the responsible AI check 508 fails the content may be deleted by the isolated virtual machine and an error message returned. Where the responsible AI check is passed the content is returned 504 such as by being stored in a memory outside the isolated virtual machine, sent to another computing entity or displayed at a user interface. In some cases the checking process 508 computes an assurance, such as a cryptographic signature, and includes the cryptographic signature in a manifest of the content. The returned content is thus labelled or associated with a responsible AI assurance indicating that it has passed responsible AI checks performed in the isolated, tamper-proof platform.

In another example digital watermarks are used as now described with reference to FIG. 5. The method is the same as for that of FIG. 3 except that the output generated by the AI application is content 402 that has a digital watermark. The content may comprise an image, a video, an audio signal, a speech signal, a 3D model, text, source code or other content with a digital watermark. The AI application generates the content 402 so as to have the digital watermark. In an example the digital watermark is generated using SynthID (trade mark) or any other digital watermark technology.

The responsible AI check 508 comprises checking that an expected digital watermark is present in content 402. If the digital watermark is found as expected the content is returned 504 to another process. Otherwise, an error message 506 is returned and/or the content is deleted. In this way any malicious software with elevated privilege in the isolated virtual machine that may have tampered with the AI application so as to remove the digital watermark or modify the digital watermark is ineffective.

In some cases, it is desired to check whether a malicious party has tampered with the AI application during the process of installing the AI application in the isolated virtual machine. A malicious party may have modified parameter values of a machine learning model of the AI application where the modification was done outside of the isolated virtual machine. In this case the AI application may not perform as expected. To test for this the checking process in the isolated virtual machine may have validation data for validating the AI application. The checking process may execute the AI application using the validation data. The validation data comprises input data and corresponding known output data where the known output data is known to be correct. The input data is input to the AI application to generate output. The generated output is compared with the known output data of the validation data and if a significant discrepancy is found the checking process fails. Otherwise the checking process is passed. If the checking process fails an error message is sent to an operator and the AI application is uninstalled.

In some cases the AI application comprises an autonomous software agent with self-learning capability. In this case there can be a risk of the autonomous software agent generating output which exceeds safety criteria or guardrails even without the influence of malware. In this case the checking process in the isolated virtual machine may check the output of the AI application using the classifier 500 or using rules or criteria stored in the isolated virtual machine. Because the checking process is within the isolated virtual machine it is not possible for malware in the isolated virtual machine to tamper with the checks. The checking process may comprise computing an assurance indicating that the output has successfully passed the checks.

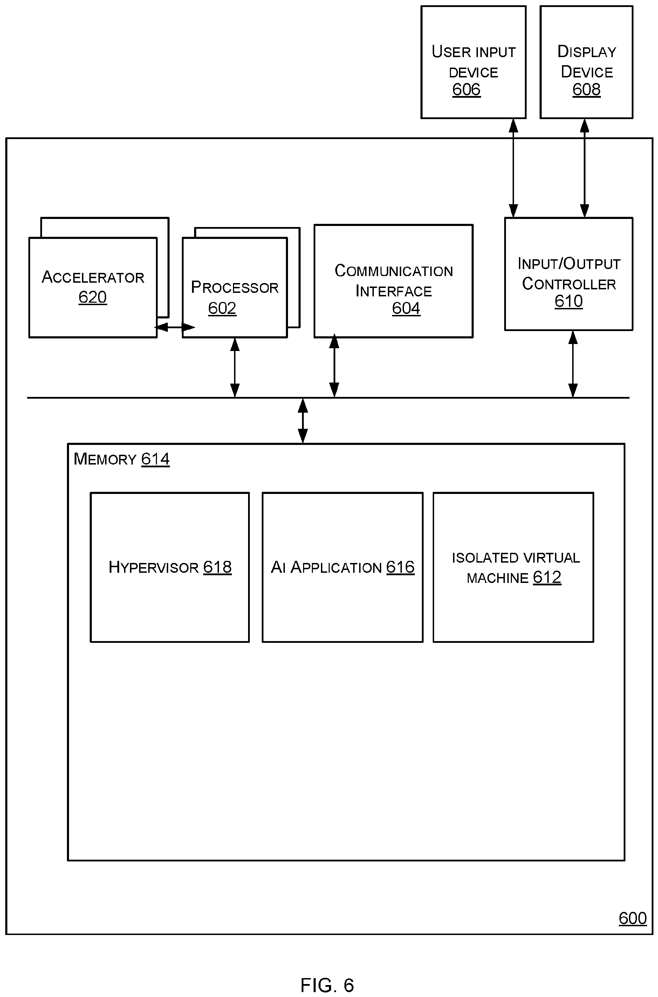

FIG. 6 illustrates various components of an exemplary computing-based device 600 such as the computing device 106, 206 of FIGs. 1 and 2. In some examples, the computing-based device 600 is a general-purpose computer that is activated or reconfigured by a computer program stored in the computer. In other examples the computing-based device is specially constructed for the intended purpose.

Computing-based device 600 comprises one or more processors 602 which are microprocessors, controllers or any other suitable type of processors for processing computer executable instructions to control the operation of the device in order to execute AI applications and carry out responsible AI checks or content provenance checks. The processors 602 may include at least one general-purpose processing device such as a central processing unit, microprocessor, complex instruction set computing (CISC) microprocessor, reduced instruction set computing (RISC) microprocessor, or other general-purpose processing device. The computing-based device 600 has one or more special-purpose processing device such as a fixed function block (also referred to as an accelerator 620) which executes part of the AI application in hardware (rather than software or firmware).

The computing-based device 600 has a hypervisor 618 and a isolated virtual machine 612. An AI application 616 is stored in memory 614 and may be executed on the device at least partly in the isolated virtual machine and using the accelerator(s) 620. The accelerator(s) are directly exposed to the isolated virtual machine 612 using input-output virtualization (not illustrated in FIG. 6).

The computer executable instructions are provided using any computer-readable media that is accessible by computing based device 600. Computer-readable media includes, for example, computer storage media such as memory 614 and communications media. Computer storage media, such as memory 614, includes volatile and non-volatile, removable and non-removable media implemented in any method or technology for storage of information such as computer readable instructions, data structures, program modules or the like. Computer storage media includes, but is not limited to, random access memory (RAM), read only memory (ROM), erasable programmable read only memory (EPROM), electronic erasable programmable read only memory (EEPROM), flash memory or other memory technology, optical storage, magnetic storage devices, or any other non-transmission medium that is used to store information for access by a computing device. In contrast, communication media embody computer readable instructions, data structures, program modules, or the like in a modulated data signal, such as a carrier wave, or other transport mechanism. As defined herein, computer storage media does not include communication media. Therefore, a computer storage medium should not be interpreted to be a propagating signal per se. Although the computer storage media (memory 614) is shown within the computing-based device 600 it will be appreciated that the storage is, in some examples, distributed or located remotely and accessed via a network or other communication link (e.g. using communication interface 604).

The computing-based device 600 also comprises an input/output controller 610 arranged to output display information to a display device 608 which may be separate from or integral to the computing-based device 600. The display information may provide a graphical user interface. The input/output controller 610 is also arranged to receive and process input from one or more devices, such as a user input device 606 (e.g. a mouse, keyboard, camera, microphone or other sensor). In some examples the user input device is a secure user input device and a communication channel between the user input device 606 and the isolated virtual machine is a secure channel. The input/output controller 610 outputs data to devices other than the display device in some examples.

Alternatively or in addition to the other examples described herein, examples include any combination of the following clauses.

Clause A. A method performed by a computing device, the method comprising:
generating output by executing at least part of an application in an isolated virtual machine with an input-output virtualized accelerator, where the application is an artificial intelligence application;
using the isolated virtual machine to check the output; and
in response to the check being successful, returning the output; and
in response to the check being unsuccessful, returning an error message.

Clause B. The method of clause A comprising:
installing malware in the isolated virtual machine;
elevating a privilege level of the malware;
using a hypervisor that manages the isolated virtual machine, preventing the malware with the elevated privilege level from affecting the check or from affecting the generating of the output.

Clause C. The method of clause A or clause B wherein the check comprises computing a change log of the generated output and signing the change log using a cryptographic key stored in the isolated virtual machine and outputting the signed change log with the output.

Clause D. The method of clause C wherein in response to the check being successful, the generated output comprises content which is returned together with a manifest comprising the signed change log.

Clause E. The method of clause A or clause B wherein output comprises content and the check comprises classifying the generated content using either a classifier at the computing device or a classifier accessible to the computing device over a secure communication link.

Clause F. The method of clause E comprising, in response to the content being classed into a first class, returning the content; and in response to the content being classed into a second class, returning an error message.

Clause G. The method of any preceding clause comprising prior to generating the output, detecting the application has an indicator indicating that it is able to be executed in the isolated virtual machine.

Clause H. The method of any preceding clause comprising generating an assurance of the output having been generated in the isolated virtual machine and returning the assurance with the output.

Clause I. The method of any preceding clause wherein using the isolated virtual machine to check the output comprises testing the AI application using validation data or checking the output using rules stored in the isolated virtual machine.

Clause J. The method of any preceding clause comprising carrying out mutual authentication between the isolated virtual machine and a secure input device, and in response to the mutual authentication succeeding, receiving data from the secure input device and using the received data to form input to the application.

Clause K. The method of clause J comprising, in response to input to the application being only from the received data, computing an assurance and outputting the assurance with the output.

Clause L. An apparatus comprising:
a processor;
a memory storing instructions that, when executed by the processor, perform a method comprising:
   generating content by executing at least part of a generative machine learning application in an isolated virtual machine with an input-output virtualized accelerator;
   using the isolated virtual machine to check the generated content; and
   in response to the check being successful, returning the generated content.

Clause M. The apparatus of clause L wherein in response to the check being unsuccessful, not returning the generated content.

Clause N. The apparatus of clause L or clause M wherein the check comprises verifying a change log of the generated content and in response to the verifying being successful, signing the change log.

Clause O. The apparatus of clause N wherein in response to the check being successful, the generated content is returned together with a manifest comprising the signed change log

Clause P. The apparatus of clause L wherein the check comprises classifying the generated content using either a classifier at the computing device or a classifier accessible to the computing device over a secure communication link.

Clause Q. The apparatus of clause P comprising, in response to the generated content being classed as ethical, returning the generated content; and in response to the generated content being classed as unethical, returning an error message.

Clause R. The apparatus of any of clauses L to Q comprising prior to generating the content, detecting the machine learning application has an indicator indicating that it is able to be executed in the isolated virtual machine.

Clause S. The apparatus of any of clauses L to R comprising:
executing malware in the isolated virtual machine;
elevating a privilege level of the malware;
using a hypervisor that manages the isolated virtual machine, preventing the malware with the elevated privilege level from affecting the check.

Clause T. A computing device comprising:
an isolated virtual machine with an input-output virtualized accelerator;
a hypervisor;
a memory storing instructions that, when executed by the computing device, perform a method comprising:
   generating content by executing at least part of an artificial intelligence application in the isolated virtual machine using the input-output virtualized accelerator;
   using the isolated virtual machine, managed by the hypervisor, to check the generated content; and
   in response to the check being successful, returning the generated content.

The term 'computer' or 'computing-based device' is used herein to refer to any device with processing capability such that it executes instructions. Those skilled in the art will realize that such processing capabilities are incorporated into many different devices and therefore the terms 'computer' and 'computing-based device' each include personal computers (PCs), servers, mobile telephones (including smart phones), tablet computers, set-top boxes, media players, games consoles, personal digital assistants, wearable computers, and many other devices.

The methods described herein are performed, in some examples, by software in machine readable form on a tangible storage medium e.g. in the form of a computer program comprising computer program code means adapted to perform all the operations of one or more of the methods described herein when the program is run on a computer and where the computer program may be embodied on a computer readable medium. The software is suitable for execution on a parallel processor or a serial processor such that the method operations may be carried out in any suitable order, or simultaneously.

Those skilled in the art will realize that storage devices utilized to store program instructions are optionally distributed across a network. For example, a remote computer is able to store an example of the process described as software. A local or terminal computer is able to access the remote computer and download a part or all of the software to run the program. Alternatively, the local computer may download pieces of the software as needed, or execute some software instructions at the local terminal and some at the remote computer (or computer network). Those skilled in the art will also realize that by utilizing conventional techniques known to those skilled in the art that all, or a portion of the software instructions may be carried out by a dedicated circuit, such as a digital signal processor (DSP), programmable logic array, or the like.

Any range or device value given herein may be extended or altered without losing the effect sought, as will be apparent to the skilled person.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item refers to one or more of those items.

The operations of the methods described herein may be carried out in any suitable order, or simultaneously where appropriate. Additionally, individual blocks may be deleted from any of the methods without departing from the scope of the subject matter described herein. Aspects of any of the examples described above may be combined with aspects of any of the other examples described to form further examples without losing the effect sought.

The term 'comprising' is used herein to mean including the method blocks or elements identified, but that such blocks or elements do not comprise an exclusive list and a method or apparatus may contain additional blocks or elements.

Additionally, as used in this disclosure, phrases of the form "at least one of an A, a B, or a C," "at least one of A, B, and C," and the like, should be interpreted to select at least one from the group that comprises "A, B, and C." Unless explicitly stated otherwise in connection with a particular instance in this disclosure, this manner of phrasing does not mean "at least one of A, at least one of B, and at least one of C." As used in this disclosure, the example "at least one of an A, a B, or a C," would cover any of the following selections: {A}, f B}, {C}, {A, B}, {A, C}, {B, C}, and {A, B, C}.

It will be understood that the above description is given by way of example only and that various modifications may be made by those skilled in the art. The above specification, examples and data provide a complete description of the structure and use of exemplary embodiments. Although various embodiments have been described above with a certain degree of particularity, or with reference to one or more individual embodiments, those skilled in the art could make numerous alterations to the disclosed embodiments without departing from the scope of this specification.

## Claims

1. A method performed by a computing device, the method comprising:
generating output by executing at least part of an application (200) in an isolated virtual machine (208) with an input-output virtualized accelerator (214, 216), where the application (200) is an artificial intelligence application;
using the isolated virtual machine (208) to check the output; and
in response to the check being successful, returning the output; and
in response to the check being unsuccessful, returning an error message.

2. The method of claim 1 comprising:
installing malware in the isolated virtual machine;
elevating a privilege level of the malware;
using a hypervisor that manages the isolated virtual machine, preventing the malware with the elevated privilege level from affecting the check or from affecting the generating of the output.

3. The method of claim 1 or claim 2 wherein the check comprises computing a change log of the generated output and signing the change log using a cryptographic key stored in the isolated virtual machine and outputting the signed change log with the output.

4. The method of claim 3 wherein in response to the check being successful, the generated output comprises content which is returned together with a manifest comprising the signed change log.

5. The method of any preceding claim wherein output comprises content and the check comprises classifying the generated content using either a classifier at the computing device or a classifier accessible to the computing device over a secure communication link.

6. The method of claim 5 comprising, in response to the content being classed into a first class, returning the content; and in response to the content being classed into a second class, returning an error message.

7. The method of any preceding claim comprising prior to generating the output, detecting the application has an indicator indicating that the application is able to be executed in the isolated virtual machine.

8. The method of any preceding claim comprising generating an assurance of the output having been generated in the isolated virtual machine and returning the assurance with the output.

9. The method of any preceding claim wherein using the isolated virtual machine to check the output comprises testing the AI application using validation data or checking the output using rules stored in the isolated virtual machine.

10. The method of any preceding claim comprising carrying out mutual authentication between the isolated virtual machine and a secure input device, and in response to the mutual authentication succeeding, receiving data from the secure input device and using the received data to form input to the application.

11. The method of claim 10 comprising, in response to input to the application being only from the received data, computing an assurance and outputting the assurance with the output.

12. An apparatus comprising:
a processor;
a memory storing instructions that, when executed by the processor, perform a method comprising:
generating content by executing at least part of a generative machine learning application (200) in an isolated virtual machine (208) with an input-output virtualized accelerator (214, 216);
using the isolated virtual machine (214, 216) to check the generated content; and
in response to the check being successful, returning the generated content.

13. The apparatus of claim 12 wherein in response to the check being unsuccessful, not returning the generated content.

14. The apparatus of claim 12 or claim 13 wherein the check comprises verifying a change log of the generated content and in response to the verifying being successful, signing the change log.

15. A computing device (106) comprising:
an isolated virtual machine (208) with an input-output virtualized accelerator (214, 216);
a hypervisor (218);
a memory storing instructions that, when executed by the computing device (106), perform a method comprising:
generating content by executing at least part of an artificial intelligence application (200) in the isolated virtual machine (208) using the input-output virtualized accelerator (214, 216);
using the isolated virtual machine (208), managed by the hypervisor (218), to check the generated content; and
in response to the check being successful, returning the generated content.
